# EUROPÄISCHE PATENTSCHRIFT

(11) **EP 0 653 110 B1**
(45) Veröffentlichungstag und Bekanntmachung des Hinweises auf die Patenterteilung: **17.04.1996**
(21) Anmeldenummer: 93915642.8
(22) Anmeldetag: 20.07.1993
(51) Int. Cl.: H02H 3/18, H02H 11/00, H04B 3/54

(54) **VERPOLUNGSSCHUTZ MIT VERMINDERTER ELEMENTFLÄCHE**
REVERSE-POLARITY PROTECTION WITH REDUCED ELEMENT SURFACE
PROTECTION CONTRE LES INVERSIONS DE POLARITE AVEC ELEMENT A SURFACE REDUITE

(30) Priorität: 31.07.1992 DE 4225453
(43) Veröffentlichungstag der Anmeldung: 17.05.1995
(73) Patentinhaber: SIEMENS AKTIENGESELLSCHAFT, D-80333 München (DE)
(72) Erfinder: ZIERHUT, Hermann, D-81739 München (DE)
(86) Internationale Anmeldenummer: DE9300635
(87) Internationale Veröffentlichungsnummer: WO9403952

(56) Entgegenhaltungen:
- EP-A- 0 379 902
- EP-A- 0 487 759
- DD-A- 143 677
- DE-A- 3 026 740
- DE-A- 3 618 500
- DE-A- 3 934 503
- DE-A- 3 934 504

## Beschreibung

Die Erfindung bezieht sich auf einen Verpolschutz zur Ankopplung einer elektrischen Schaltung an ein Leitersystem, wobei wenigstens ein Ankopplungspfad ein steuerbares Element als Verpolschutz umfaßt. Ein derartiger Verpolschutz ist bekannt (EP-A-0 487 759).

Bei einer induktiven Ankopplung einer Sendeschaltung an das Leitersystem mittels eines Wandlers und bei primärseitiger Sendespule sowie bei vorgesehenem Freilaufkreis für einen Kommutierungsstrom zur Entladung in einem LC-Kreis der Sendeschaltung treten bei Vorgängen, die als Schalten von induktiven Lasten verstanden werden können, durch die hohen Kommutierungsstromsteilheiten kurzzeitig hohe Spannungsfälle über das als Verpolschutz dienende steuerbare Element auf. Diese können die übertragene Nachricht verfälschen. Zur Abhilfe kann das Verpolungsschutzelement mit größerer innerer Element flache versehen werden, also bei Halbleitertechnik insgesamt größer ausgeführt werden. Das steht jedoch einer angestrebten Miniaturisierung entgegen.

Der Erfindung liegt die Aufgabe zugrunde, einen Verpolschutz zu entwickeln, der mit einem kleineren Verpolungsschutzelement bzw. mit einem steuerbaren Element mit kleinerer innerer Elementfläche auskommt.

Die Lösung der geschilderten Aufgabe erfolgt durch einen Verpolschutz nach Patentanspruch 1. Der Kommutierungsstrom wird hierbei über ein Kommutierungsventil gespiegelt und über die Steuerelektrode des als Verpolschutz dienenden Elements, also des Verpolungsschutzelements, geführt. Man kommt hierbei mit verminderter innerer Elementfläche aus. Durch die niedrigere zu übertragende Leistung im Verpolungsschutzelement kann dieses in einen IC-Kreis integriert werden.

Wenn auf die Sendespule zumindest ein Sendeventil arbeitet und die Sendespule zugleich in einem Kommutierungszweig mit zumindest einem Kommutierungsventil angeordnet ist, kann als Kommutierungsventil vorteilhaft ein Transistor in Basisschaltung dienen. Besonders symmetrisches Verhalten beim Senden und bei der Kommutierung wird durch ein Kommutierungsventil aus zwei antiseriellen Transistoren bei verbundener Basis erzielt. Die antiseriellen Transistoren können insbesondere als Doppel-Kollektor-Transistor im Kommutierungskreis ausgeführt sein. Besonders günstig ist ein symmetrischer Doppel-Kollektor-Transistor.

Die antiseriellen Transistoren und besonders der symmetrische Doppel-Kollektor-Transistor kann vorteilhaft in ein IC-Bauteil integriert werden.

Die Erfindung soll nun anhand von in der Zeichnung grob schematisch wiedergegebenen Ausführungsbeispielen näher erläutert werden:
- In FIG 1: ist ein Verpolschutz bei einem kommutierenden Freilaufkreis wiedergegeben.
- In FIG 2: ist die Schaltungsanordnung nach FIG 1, jedoch in Verbindung mit antiseriellen Transistoren als Kommutierungsventil dargestellt.
- In FIG 3: ist für eine Schaltungsanordnung nach FIG 1 der Kommutierungsstrom veranschaulicht.

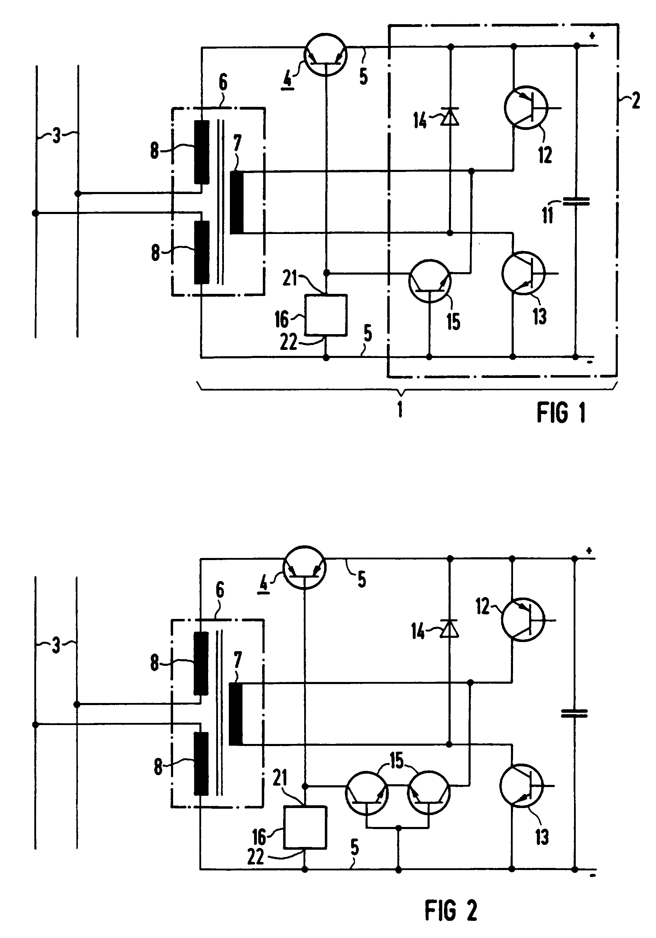

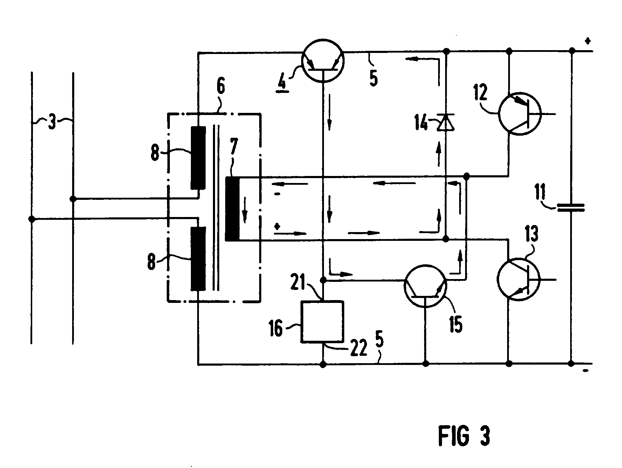

Die elektrische Schaltung 2 bzw. Sendeschaltung einer Ankopplungsschaltung 1 nach FIG 1 arbeitet auf ein Leitersystem 3, beispielsweise ein Bussystem. Ein Verpolungsschutzelement 4 in der Ausführung als Doppel-Emitter-Transistor sorgt für polungsgerechten Anschluß, indem er den Ankopplungspfad 5 bei verpolungsrichtigem Anschluß freigibt und bei falschem Anschluß sperrt. Ein derartiges Verpolungsschutzelement ist im einzelnen in EP-A-0 487 759 beschrieben. Das Verpolungsschutzelement 4 wird von einer Ansteuerschaltung 16 gesteuert. Das Verpolungsschutzelement 4 liegt mit seinen Arbeitselektroden im Ankopplungspfad 5. Bei induktiver Ankopplung der Sendeschaltung 2 an das Leitersystem 3 mittels eines Wandlers 6 wird der Sendestrom über die primärseitige Sendespule 7 geführt. Eine Gleichspannung steht als Bordnetzspannung zwischen dem Ankopplungspfad 5 bzw. dem Kondensator 11 an. Die Schaltung kann als Weiche wirken zwischen einer im Leitersystem geführten Gleichspannungsenergie und einer Wechselspannungsinformation. Die Sekundärwicklungen 8 des Wandlers 6 liegen im Ankopplungspfad 5. Zu Sendeventilen 12 und 13 für symmetrischen Sendevorgang liegen parallel Kommutierungsventile 14 und 15, die eine Freilaufschaltung zur Sendewicklung 7 bilden. Der Kommutierungsstrom in der Freilaufphase ist in FIG 3 veranschaulicht und grundsätzlich in EP-A-0 379 902 beschrieben. Wesentlich ist jedoch, daß der Kommutierungsstrom über das Kommutierungsventil 15 gespiegelt und der Steuerelektrode des Verpolungsschutzelements 4 zu geführt ist. Eines der Kommutierungsventile, das Kommutierungsventil 15, ist im Ausführungsbeispiel nach den FIG 1 und FIG 3 ein Transistor in Basisschaltung. Die Ansteuerschaltung 16 ist zwischen Basis und Kollektor an das Kommutierungsventil 15 angeschlossen. Der Ansteuerausgang 21 ist mit der Basis bzw. der Steuerelektrode des Verpolungsschutzelements 4 verbunden. Der weitere Ansteuerausgang 22 der Ansteuerschaltung 16 ist mit der Bezugsmasse der Sendeschaltung 2 verbunden.

Um symmetrische Verhältnisse zu erzielen, kann das Kommutierungsventil 15 aus zwei antiseriellen Transistoren bei verbundener Basis gebildet werden, wie es in FIG 2 veranschaulicht ist. Dieses Kommutierungsventil kann insbesondere als Doppel-Kollektor-Transistor ausgeführt sein. Diese Ausbildungen eignen sich insbesondere zur Integration in einem IC-Kreis. Besonders vorteilhaft ist ein symmetrischer Doppel-Kollektor-Transistor.

Die Ansteuerschaltung 16 ist dafür ausgelegt, daß sie je nach Betriebszustand, z.B. Empfangen oder Senden oder hoher Gleichstrombedarf für das Bordnetz, dem Verpolungsschutzelement 4 einen entsprechenden Ansteuerstrom zuführt. Es sei angenommen, daß im normalen Empfangsbetriebszustand über das Verpolungsschutzelement 4 ein Strom von einigen Milliampere fließt, beispielsweise von 10 Milliampere. Bei Sendebetrieb fließt dann ein Strom in der Größenordnung von beispielsweise + 0,3 Ampere. Hierfür ist ein erheblich größerer Steuerstrom für das Verpolungsschutzelement 4 erforderlich. Beim erfindungsgemäßen Verpolschutz wird hierzu der Arbeitsstrom, der über die senderseitige Wicklung 7 fließt, über die Steuerelektrode des Verpolungsschutzelements geleitet und so der größere Steuerstrom aufgebracht. Im Ausführungsbeispiel nach FIG 1 und FIG 2 dient als Steuerelektrode die Basis eines symmetrischen Doppelemitter (symmetrischer bipolarer Transistor) -Transistors. Unter einem symmetrischen Doppelemittertransistor ist also ein symmetrischer Aufbau, beispielsweise eines pnp-Bipolartransistors zu verstehen, bei welchem je nach Stromrichtung einer der Emitter zum Kollektor wird. Bezogen auf einen normalen Transistor mit Emitter und Kollektor fließt einmal der Strom im Normalbetrieb und dann im Inversbetrieb.

Die Ansteuerschaltung 16 ist dafür ausgelegt, daß bei richtiger Polung durch Ziehen von Strom aus der Basis des Verpolungsschutzelements 4 das Verpolungsschutzelement leitend gesteuert wird. Bei falscher Polung, also bei verpoltem Anschluß der Sendeschaltung 2, zieht die Ansteuerschaltung 16 keinen Strom, sperrt also, so daß das Verpolungsschutzelement 4 nicht leitend gesteuert wird, also sperrt. Weiterhin ist sie dafür ausgelegt, daß bei Sendebetrieb, bzw. bei erhöhtem Strombedarf der angeschlossenen Schaltung, einschließlich der Sendeschaltung 2, jeweils der erforderliche Steuerstrom bereitgestellt wird.

Beim Verpolungsschutz nach der Erfindung wird der Kommutierungsstrom als Steuerstrom mit herangezogen. Üblicherweise weist eine Regeleinheit nach Art der Ansteuerschaltung 16 eine Regelträgheit auf, so daß vor positivem bzw. negativem Strom durch das angesteuerte Element ein hochohmiger Zwischenzustand auftritt. Durch die erfindungsgemäße Umleitung des Kommutierungsstroms und das Heranziehen als Steuerstrom, wobei dieser über die Basis des Verpolungsschutzelements 4 geführt wird, das hier als zusteuerndes Element angesehen werden kann, wird dieser Nachteil vermieden. Man vermeidet also durch das Heranziehen des Kommutierungsstroms als zusätzlichen Steuerstrom den hochohmigen Zwischenzustand. Damit erziehlt man eine trägheitslose Ansteuerung.

Das Kommutierungsventil 15 durch zwei antiserielle Transistoren zu bilden, ist besonders in den Anwendungsfällen günstig, in denen die Ausgangsspannung an der primärseitigen Sendewicklung 7 größer ist als die Zenerspannung an der Basis-Emitter-Strecke. Bei einem derartigen Kommutierungsventil ist die Basis-Emitter-Zenerspannung gleich der maximalen Kollektor-Emitter-Sperrspannung. Entsprechende Verhältnisse liegen bei einem Kommutierungsventil in der Ausführung als Doppel-Kollektor-Transistor vor.

Bei einem Kommutierungsventil 15 aus zwei antiseriellen Transistoren und bei einem Doppel-Kollektor-Transistor, einem neuartigen Element, arbeitet die zweite Emitter-Basis-Kollektorstrecke hinsichtlich der ersten im Inversbetrieb. Im Sättigungsbetrieb wird die erste Transistorstrecke leitend und reißt die zweite Transistorstrecke in den leitenden Zustand mit. Der Kommutierungsstrom wird dadurch zum Verpolungsschutzelement 4 umgeleitet. Diese Umleitung wirkt als zusätzlicher Stromstoß auf das Verpolungsschutzelement, und zwar verzögerungsfrei. Dieser Vorgang wirkt wie ein zusätzlicher Ansteuerungsstrom auf das Verpolungsschutzelement 4. Die Ansteuerung für das Verpolungsschutzelement wird also aus dem Kommutierungsstrom gewonnen, so daß das Verpolungsschutzelement hinsichtlich Anfang und Ende des Kommutierungsstroms verzögerungsfrei durch den Kommutierungsstrom selbst gesteuert wird.

## Patentansprüche

1. Verpolschutz zur Ankopplung einer elektrischen Schaltung (2) an ein Leitersystem (3), wobei wenigstens ein Ankopplungspfad (5) ein steuerbares Element als Verpolschutz umfaßt - nachstehend Verpolungsschutzelement (4) genannt -, **dadurch gekennzeichnet**, daß bei einer induktiven Ankopplung einer Sendeschaltung (2) an das Leitersystem (3) mittels eines Wandlers (6) und bei primärseitiger Sendespule (7) sowie bei vorgesehenem Freilaufkreis für einen Kommutierungsstrom zur Entladung in einem LC-Kreis der Sendeschaltung - der Kommutierungsstrom über die Steuerelektrode des Verpolungsschutzelements (4) geführt ist.

2. Verpolschutz nach Anspruch 1, wobei auf die Sendespule (7) zumindest ein Sendeventil (12;13) arbeitet und die Sendespule (7) zugleich in einem Kommutierungszweig mit zumindest einem Kommutierungsventil (14;15) angeordnet ist, **dadurch gekennzeichnet**, daß als Kommutierungsventil (15) ein Transistor in Basisschaltung dient.

3. Verpolschutz nach Anspruch 1 oder 2, wobei ein Kommutierungsventil in einem Kommutierungszweig angeordnet ist, **dadurch gekennzeichnet**, daß als Kommutierungsventil (15) zwei antiserielle Transistoren bei verbundener Basis dienen.

4. Verpolschutz nach Anspruch 3,
**dadurch gekennzeichnet**, daß die antiseriellen Transistoren als Doppel-Kollektor-Transistor ausgeführt sind und im Kommutierungskreis liegen.

5. Verpolschutz nach Anspruch 4,
**gekennzeichnet durch** einen symmetrischen Doppel-Kollektor-Transistor.

6. Verpolschutz nach Anspruch 3, 4 oder 5,
**dadurch gekennzeichnet**, daß als Kommutierungsventil (15) dienende Flächen in einem IC-Kreis integriert sind.

## Claims

1. Polarity reversal protection for coupling an electrical circuit (2) to a conductor system (3), with at least one coupling path (5) comprising a controllable element as polarity reversal protection, referred to below as a polarity reversal protection element (4), characterised in that, with an inductive coupling of a transmission circuit (2) to the conductor system (3) by means of a transformer (6), and with a primary transmission coil (7), and with a free-wheeling circuit that is provided for a commutation current for discharging in an LC circuit of the transmission circuit - the commutation current is conducted by way of the control electrode of the polarity reversal protection element (4).

2. Polarity reversal protection according to claim 1, wherein at least one transmission valve (12; 13) operates with the transmission coil (7) and, at the same time, the transmission coil (7) is arranged in a commutation branch with at least one commutation valve (14; 15), characterised in that a transistor serves as the commutation valve (15) in the basic circuit.

3. Polarity reversal protection according to claim 1 or 2, wherein a commutation valve is arranged in a commutation branch, characterised in that two antiserial transistors serve as the commutation valve (15), with a connected base.

4. Polarity reversal protection according to claim 3, characterised in that the antiserial transistors are designed as a double collector-transistor and are located in the commutation circuit.

5. Polarity reversal protection according to claim 4, characterised by a symmetrical double collector-transistor.

6. Polarity reversal protection according to claim 3, 4 or 5, characterised in that surfaces serving as the commutation valve (15) are integrated in an IC circuit.

## Revendications

1. Dispositif de protection contre une inversion de polarité pour le couplage d'un circuit électrique (2) à un système de conducteurs (3), au moins une voie de couplage (5) comprenant un élément pouvant être commandé en tant que protection contre une inversion de polarité, désigné ci-après par l'expression élément (4) de protection contre une inversion de polarité, caractérisé par le fait que dans le cas où un circuit d'émission (2) est couplé de manière inductive au système de conducteurs (3) à l'aide d'un transformateur (6), dans le cas d'une bobine d'émission primaire (7) et dans le cas où un circuit de roue libre est prévu pour un courant de commutation pour la décharge dans un circuit LC du circuit d'émission, le courant de commutation est guidé par l'intermédiaire de l'électrode de commande de l'élément (4) de protection contre une inversion de polarité.

2. Dispositif de protection contre une inversion de polarité suivant la revendication 1, dans lequel au moins une valve d'émission (12;13) agit sur la bobine d'émission (7), et la bobine d'émission (7) est disposée simultanément dans une branche de commutation comportant au moins une valve de commutation (14;15), caractérisé par le fait qu'on utilise comme valve de commutation (15) un transistor monté en base commune.

3. Dispositif de protection contre une inversion de polarité suivant la revendication 1 ou 2, dans lequel une valve de commutation est disposée dans une branche de commutation, caractérisé par le fait qu'on utilise comme valve de commutation (15) deux transistors montés en opposition et en série, dont les bases sont reliées.

4. Dispositif de protection contre une inversion de polarité suivant la revendication 3, caractérisé par le fait que les transistors montés en opposition en série sont sous la forme d'un transistor à double collecteur et sont situés dans le circuit de commutation.

5. Dispositif de protection contre une inversion de polarité, caractérisé par un transistor symétrique à double collecteur.

6. Dispositif de protection contre une inversion de polarité suivant la revendication 3, 4 ou 5, caractérisé par le fait que des surfaces utilisées comme valves de commutation (15) sont intégrées à un circuit intégré.
